# EUROPÄISCHE PATENTSCHRIFT

(11) **EP 1 228 929 B1**
(45) Veröffentlichungstag und Bekanntmachung des Hinweises auf die Patenterteilung: **30.06.2004**
(21) Anmeldenummer: 02002729.8
(22) Anmeldetag: 06.02.2002
(51) Int. Cl.: B60R 21/20

(54) **AIRBAGVORRICHTUNG**
AIRBAG DEVICE
DISPOSITIF D'AIRBAG

(30) Priorität: 06.02.2001 DE 20101990 U
(43) Veröffentlichungstag der Anmeldung: 07.08.2002
(73) Patentinhaber: Volkswagen AG, 38440 Wolfsburg (DE)
(72) Erfinder: Müller, Olaf, 65428 Rüsselsheim (DE); Kessler, Jörn, 27607 Langen (DE)
(74) Vertreter: Lindner, Manfred Klaus, Dipl.-Phys.

(56) Entgegenhaltungen:
- DE-A- 10 025 417
- DE-A- 19 750 182
- DE-U- 20 004 063
- US-A- 6 126 195
- PATENT ABSTRACTS OF JAPAN vol. 017, no. 358 (M-1440), 7. Juli 1993 (1993-07-07) -& JP 05 050893 A (NISSAN MOTOR CO LTD), 2. März 1993 (1993-03-02)

## Beschreibung

Die Erfindung betrifft eine Airbagvorrichtung nach dem Oberbegriff des Anspruchs 1, mit einer rückziehbaren Abdeckklappe, sowie ein Montage- und ein Betriebsverfahren für eine solche Airbagvorrichtung.

Solche Airbagklappen werden mittels einer separaten Mechanik in das Modulgehäuse zurückgezogen, bevor der Airbag aus der Armaturentafel austritt. Sinn und Zweck von Airbagklappen, die in das Modul hineingezogen werden, wurden vom vorliegenden Erfinder z.B. in der älteren Europäischen Patentanmeldung EP 0867346 A1 umfassend beschrieben. Die grundsätzliche Idee der Erfindung ist, dass nicht mit dem Airbag direkt, sondern über Hilfsmittel die jeweilige Verkleidung entfernt wird. Hierdurch wird erreicht, dass der Airbag mit niedrigerem Druck nicht aggressiv und damit nicht verletzungsgefährdent austreten kann.

In der den Oberbegriff der Ansprüche 1 und 4 offenbarenden DE 197 50 182 A1 wird ein Airbagmodul mit einem Antrieb für eine Airbagklappe gezeigt. Dabei ist vorgesehen, dass als Antrieb eine mit der Abdeckklappe gekoppelte und von einem Teilstrom des von einem Gasgenerator bei Auslösung zum Aufblasen eines Gassackes freisetzenden Gases beaufschlagte und in das Gehäuse integrierte Hubeinheit vorgesehen ist, welche die Abdeckklappe bei ihrer durch den Teilgasstrom bewirkten Verschiebung in deren Freigabestellung bewegt. Die Hubeinheit ist über flexible Bänder mit der zu bewegenden Abdeckklappe verbunden.

Die vorliegende Erfindung hat zum Ziel, bekannte Airbagvorrichtungen und deren Montage- sowie Betriebsverfahren jeweils mit rückziehbaren Airbagklappen, weiter zu vereinfachen.

Dieses Ziel wird mit einer Airbagvorrichtung nach dem Anspruch 1, einem Montageverfahren für eine solche Airbagvorrichtung nach dem Anspruch 4 und einem Betriebsverfahren für eine solche Airbagvorrichtung nach dem Anspruch 6 erreicht.

Mit der vorliegenden Erfindung werden somit weitere vorteilhafte Ausgestaltungsmöglichkeiten einer Airbagvorrichtung sowie deren Betriebs- und Herstellungsverfahren gemäß den und bezüglich der vorstehend genannten älteren Anmeldungen geschaffen. Insbesondere werden weitere vorteilhafte Mechanismen und -antriebe zur Öffnung von Airbagklappen, insbesondere eine Airbagklappenöffnungsmechanik mit selbstverbindender Airbagmodulanbindung sowie entsprechende Betriebs- und Herstellungsverfahren, geschaffen.

In Ergänzung zu den eingangs angegebenen früheren Schutzrechtsanmeldungen einer Mechanik zum Einziehen der Airbagklappe in das Modul zeitlich vor dem gesteuerten Aufblasen des Airbags, sieht die vorliegende Erfindung im Hinblick auf die Bauart und das Herstellungsverfahren einer Airbagvorrichtung in vorteilhafter Weise vor, die Öffnungsmechanik derart zu montieren, dass eine Montage bzw. Demontage des eigentlichen Airbagmodules getrennt von der Öffnungsmechanik vorgenommen werden kann, ohne die Öffnungsmechanik zu berühren. Erst beim potentiellen Crash klinkt vorzugsweise ein Mitnehmer am Modul die Öffnungsmechanik ein, wie das erfindungsgemäße Betriebsverfahren der Airbagvorrichtung dann vorsieht.

Erfindungsgemäß ist bei einer Airbagvorrichtung mit einem Airbagmodul und wenigstens einer Abdeckeinrichtung, hinter der in einer Schließlage ein sich durch Gasfüllung ausbreitender Gassack untergebracht ist und die zum Freigeben der Ausbreitung des Gassackes mittels einer Mechanik aus der Schließlage in eine Offenlage bewegbar ist, vorgesehen, dass die Mechanik eine erste Mechanikkomponente, die fest mit dem Airbagmodul gekoppelt ist, und eine zweite Mechanikkomponente enthält, die fest mit der Abdeckeinrichtung gekoppelt ist, und dass das Airbagmodul zusammen mit der ersten Mechanikkomponente eine einbaufertige Einheit bildet. Weiter ist vorgesehen, dass Zugelemente, Zugseile oder Zugbänder als Bestandteile der zweiten Mechanikkomponente an oder innerhalb eines Verstärkungskastens montiert sind, der eine Öffnung für den Airbagaustritt in einer Armaturentafel abstützt, wobei insbesondere die Zugelemente als Bestandteile der zweiten Mechanikkomponente in einem gegenüber wenigstens einem Mitnehmerbolzen als Bestandteil der ersten Mechanikkomponente lagepositionierten Haken wiederum als Bestandteile der zweiten Mechanikkomponente zusammengeführt sind. Dabei können alternativ auch eine Seil- bzw. Zugband-Schlaufe und entsprechend geformte bzw. abgekröpfte Mitnehmerbolzen vorgesehen sein.

In weiterer Ausgestaltung davon ist mit Vorzug vorgesehen, dass sich die erste Mechanikkomponente und die zweite Mechanikkomponente bei der Montage bzw. Demontage nicht berühren und erst im Crash miteinander gekoppelt werden.

Eine weitere vorteilhafte Ausgestaltung der erfindungsgemäßen Airbagvorrichtung besteht darin, dass die zweite Mechanikkomponente der Koppelmechanik und Abdeckungen derselben durch Taschen, die an einem Strangpressprofil des Airbaggehäuses integriert sind, und auf der Gegenseite durch Abstellungen des Verstärkungskastens geführt ist.

Ein Montageverfahren für eine Airbagvorrichtung nach der vorliegenden Erfindung beinhaltet unter anderem, dass die Mechanik eine erste Mechanikkomponente enthält, die fest mit dem Airbagmodul gekoppelt wird, so dass das Airbagmodul zusammen mit der ersten Mechanikkomponente eine einbaufertige Einheit bildet, und eine zweite Mechanikkomponente enthält, die fest mit der Abdeckeinrichtung gekoppelt wird, und dass die erste Mechanikkomponente beim oder nach dem Einbau der Airbagvorrichtung hinter einer Fahrzeuginnenverkleidung in eine Wirklage bezüglich der zweiten Mechanikkomponente gebracht wird. Insbesondere können dabei die erste Mechanikkomponente und die zweite Mechanikkomponente beim Einbau der Airbagvorrichtung hinter einer Fahrzeuginnenverkleidung miteinander gekoppelt werden.

Weitere bevorzugte und vorteilhafte Ausgestaltungen der Erfindung im Reihmender Patentansprüche ergeben sich aus der Gesamtheit der vorliegenden Unterlagen.

Soweit in den vorliegenden Unterlagen zur Erläuterung der Erfindung auf eine Beifahrer-Airbagvorrichtung Bezug genommen wird, die als Airbagmodul mit rückziehbarem Airbagdeckel ausgestaltet ist, dient dies nur der exemplarischen Darstellung. Die Erfindung ist nicht auf Anwendungen bei Beifahrer-Airbagvorrichtungen beschränkt, sondern kann auch bei anderen Airbagvorrichtungen als Beifahrer-Airbagvorrichtungen mit Vorteil eingesetzt werden.

Anhand der nachfolgend beschriebenen und in den Zeichnungen dargestellten Ausführungs- und Anwendungsbeispiele wird die Erfindung lediglich exemplarisch näher erläutert. In den Zeichnungen zeigen:
- Fig. 1: eine schematische Übersichtsdarstellung einer erfindungsgemäßen Airbagvorrichtung im Schnitt,
- Fig. 2: ein erstes Ausführungsbeispiel einer Airbagvorrichtung in einer schematischen teilweisen Draufsicht,
- Fig. 3: eine schematische teilweise Querschnittsansicht der Airbagvorrichtung des ersten Ausführungsbeispiels von Fig. 2,
- Fig. 4: eine Variante des ersten Ausführungsbeispiels der Airbagvorrichtung von Fig. 2 in einer schematischen teilweisen Querschnittsansicht analog zur Fig. 3,
- Fig. 5: eine schematische Schnittansicht eines Details der Darstellung der Fig. 4 der Variante des ersten Ausführungsbeispiels der Airbagvorrichtung von Fig. 2,
- Fig. 6: eine erste Alternative zur Variante des ersten Ausführungsbeispiels der Airbagvorrichtung von Fig. 2 in einer schematischen Schnittansicht eines Details analog zur Darstellung der Fig. 5,
- Fig. 7: eine zweite Alternative zur Variante des ersten Ausführungsbeispiels der Airbagvorrichtung von Fig. 2 in einer schematischen Schnittansicht eines Details analog zur Darstellung der Fig. 5,
- Fig. 8: ein zweites Ausführungsbeispiel einer Airbagvorrichtung in einer schematischen teilweisen Draufsicht,
- Fig. 9: eine wesentliche Ausgestaltung eines dritten Ausführungsbeispiels in einer schematischen teilweisen Querschnittsansicht,
- Fig. 10 und 11: schematische Schnittansichten eines Details der Darstellung der Fig. 9 des dritten Ausführungsbeispiels der Airbagvorrichtung,
- Fig. 12: eine wesentliche Ausgestaltung eines vierten Ausführungsbeispiels in einer schematischen teilweisen Querschnittsansicht,
- Fig. 13 und 14: schematische Schnittansichten eines Details der Darstellung der Fig. 12 des vierten Ausführungsbeispiels der Airbagvorrichtung,
- Fig. 15: eine wesentliche Ausgestaltung eines fünften Ausführungsbeispiels in einer schematischen teilweisen Querschnittsansicht,
- Fig. 16: eine schematische Seitenansicht zur Darstellung der Fig. 15 des fünften Ausführungsbeispiels der Airbagvorrichtung,
- Fig. 17: eine schematische Schnittansicht des fünften Ausführungsbeispiels der Airbagvorrichtung in einem Überblick unter Berücksichtigung des Details aus den Fig. 15 und 16,
- Fig. 18 bis 20: weitere schematische Schnittansichten des fünften Ausführungsbeispiels der Airbagvorrichtung basierend auf den Fig. 15 und 16,
- Fig. 21 bis 23: schematische Schnittansichten einer Variante des fünften Ausführungsbeispiels der Airbagvorrichtung analog zu den Darstellungen in den Fig. 18 bis 20,
- Fig. 24: eine schematische Schnittansicht der Variante des fünften Ausführungsbeispiels der Airbagvorrichtung gemäß den Fig. 21 bis 23 in einem Überblick unter Berücksichtigung des Details aus den Fig. 21 bis 23,
- Fig. 25: ein sechstes Ausführungsbeispiel einer Airbagvorrichtung in einer schematischen teilweisen Draufsicht,
- Fig. 26 und 27: schematische Schnittansichten eines Details der Darstellung der Fig. 25 des sechsten Ausführungsbeispiels der Airbagvorrichtung,
- Fig. 28: eine weitere schematische Schnittansicht eines Details der Darstellung der Fig. 25 des sechsten Ausführungsbeispiels der Airbagvorrichtung mit einer zusätzlichen Alternative,
- Fig. 29 und 30: schematische Schnittansichten eines Details einer weiteren Variante des sechsten Ausführungsbeispiels der Airbagvorrichtung in Darstellungen vergleichbar den Fig. 26 bis 28,
- Fig. 31 und 32: schematische Schnittansichten eines weiteren Details zum Antrieb bei einer Airbagvorrichtung,
- Fig. 33: eine schematische perspektivische Teilansicht eines weiteren Details zum Antrieb bei einer Airbagvorrichtung, und
- Fig. 34: eine schematische teilweise Schnittansicht eines Zugbandes zum Antrieb bei einer Airbagvorrichtung.

Gleiche Bezugszeichen in den einzelnen Figuren und Abbildungen der Zeichnungen bezeichnen gleiche oder ähnliche oder gleich oder ähnlich wirkende Komponenten.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen der Patentansprüche, mit jeglichen anderen Varianten, auch wenn sie in den vorliegenden Unterlagen nicht gesondert behandelt sind, kombiniert werden.

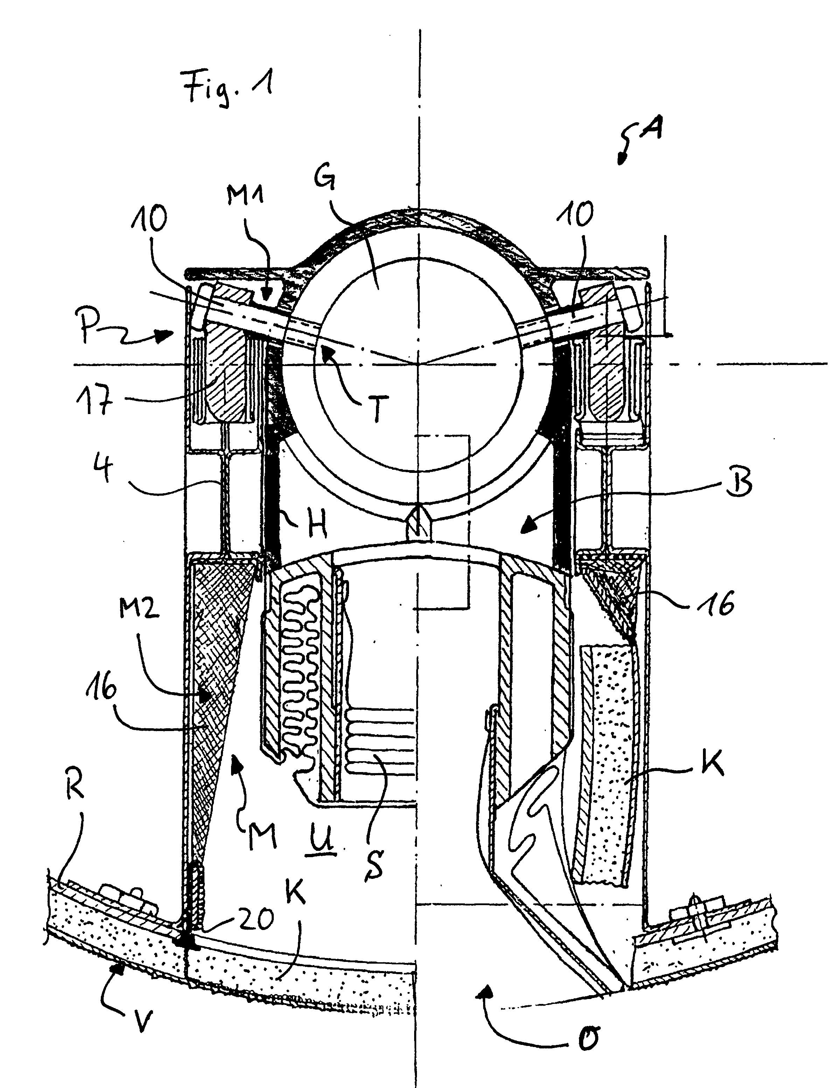

Für alle in den Figuren der Zeichnungen dargestellten und nachfolgend behandelten Ausgestaltungen der Erfindung gilt exemplarisch der in der Fig. 1 in einer Übersicht anhand einer schematischen Schnittdarstellung gezeigte Gesamtaufbau einer Airbagvorrichtung A mit einem Airbagmodul B, das einen Gasgenerator G und einen Gassack S sowie eventuell ein gesondertes Gehäuse H dafür enthält, und wenigstens eine Airbagklappe K als Abdeckeinrichtung aufweist. Dem Airbagmodul B ist ferner ein Antrieb T zugeordnet, der über eine Mechanik M, die aus zwei Mechanikkomponenten M1 und M2 besteht, mit der Airbagklappe K gekoppelt ist. Die Mechanikkomponente M1 ist grundsätzlich fest mit dem Antrieb T verbunden, und die Mechanikkomponente M2 ist grundsätzlich fest mit der Airbagklappe K verbunden.

Das Airbagmodul B samt Antrieb T einerseits und die wenigstens eine Airbagklappe K andererseits werden getrennt an einer Struktur eines Fahrzeuges (nicht gezeigt), wie beispielsweise einem Armaturenbrett V oder deren Träger R, montiert. Die Mechanikkomponenten M1 und M2 werden bei dieser Montage dann an einer Kopplungsstelle P gekoppelt oder so in eine Wirkverbindung gebracht, dass vor einem Austritt des Gassackes S aus einem Unterbringungsraum U durch eine zunächst von der wenigstens einen Airbagklappe K verschlossenen Öffnung O in einem Armaturenbrett V oder einem Lenkrad (nicht gezeigt) die Airbagklappe K von dem Antrieb T weggezogen wird, so dass der sich dann mit Druckgas aus dem Gasgenerator G füllende und damit ausdehnende Gassack S ungehindert durch die besagte Öffnung O zu einem Insassen (nicht gezeigt) hin austreten und bewegen kann, um letzteren im Falle eines Unfalls zu schützen.

Wesentlich dabei ist, dass das Airbagmodul B oder wenigstens der Antrieb T wegen einer pyrotechnischen Ladung für letzteren erst zu einem relativ späten Zeitpunkt in das derart auszustattende Fahrzeug eingebaut wird und trotzdem eine zuverlässige Anbindung der Mechanikkomponente M1 an die Mechanikkomponente M2 erreicht wird. Dies ist deshalb von Bedeutung , weil einerseits für den direkten Umgang mit der pyrotechnischen Ladung speziell geschultes und qualifiziertes Personal erforderlich ist und andererseits eine Beeinträchtigung dieser pyrotechnischen Ladung durch spätere Montagearbeiten vermieden oder herabgesetzt wird.

Bei der nachfolgenden Befassung mit Details der einzelnen Ausführungsbeispiele sowie Varianten davon und Alternativen dazu entsprechend den Figuren der Zeichnungen wird der vorstehende Grundaufbau vorausgesetzt und nicht jedesmal wieder im einzelnen erläutert.

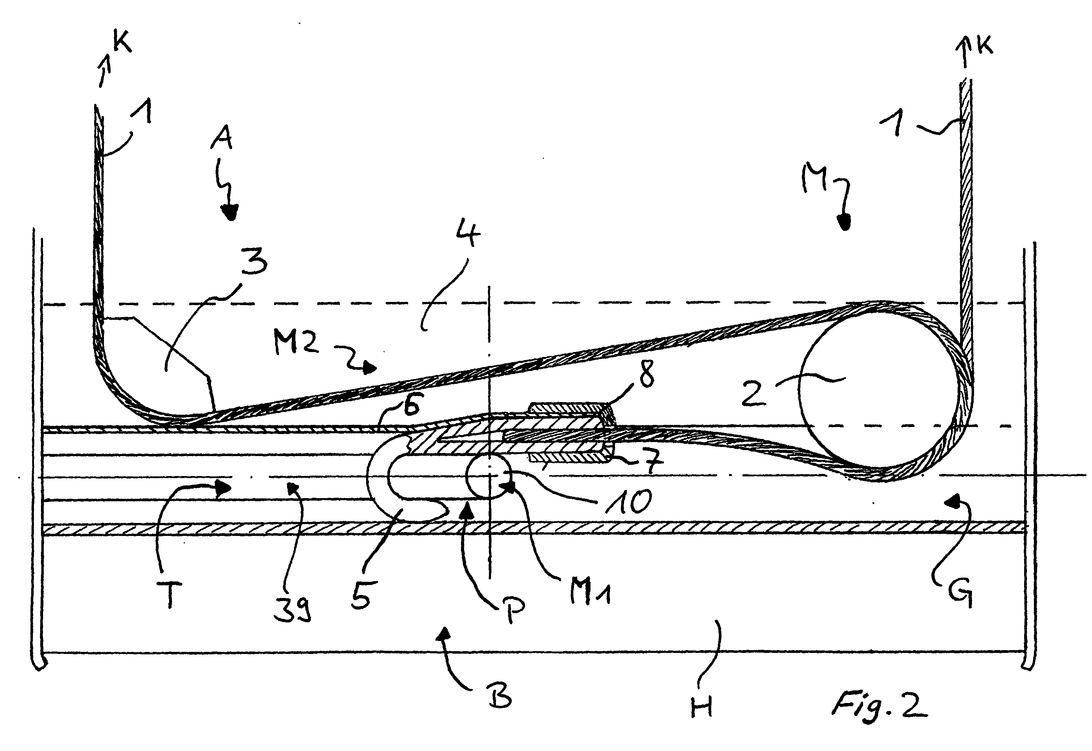

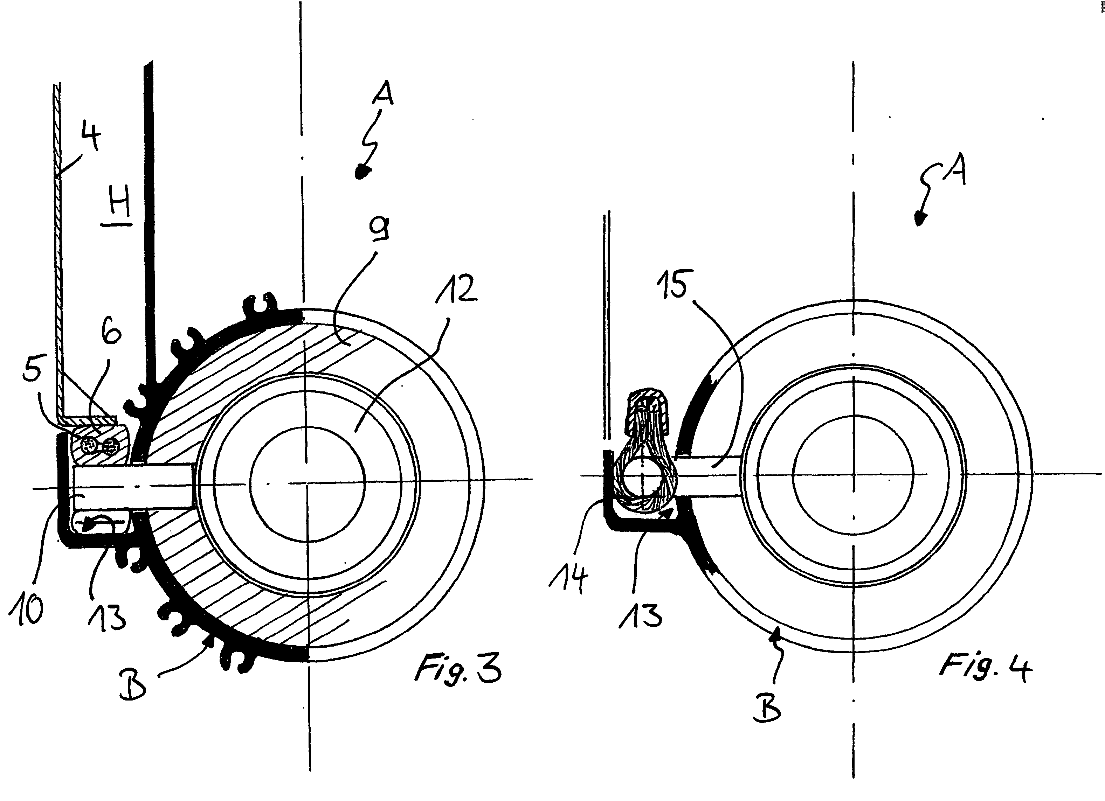

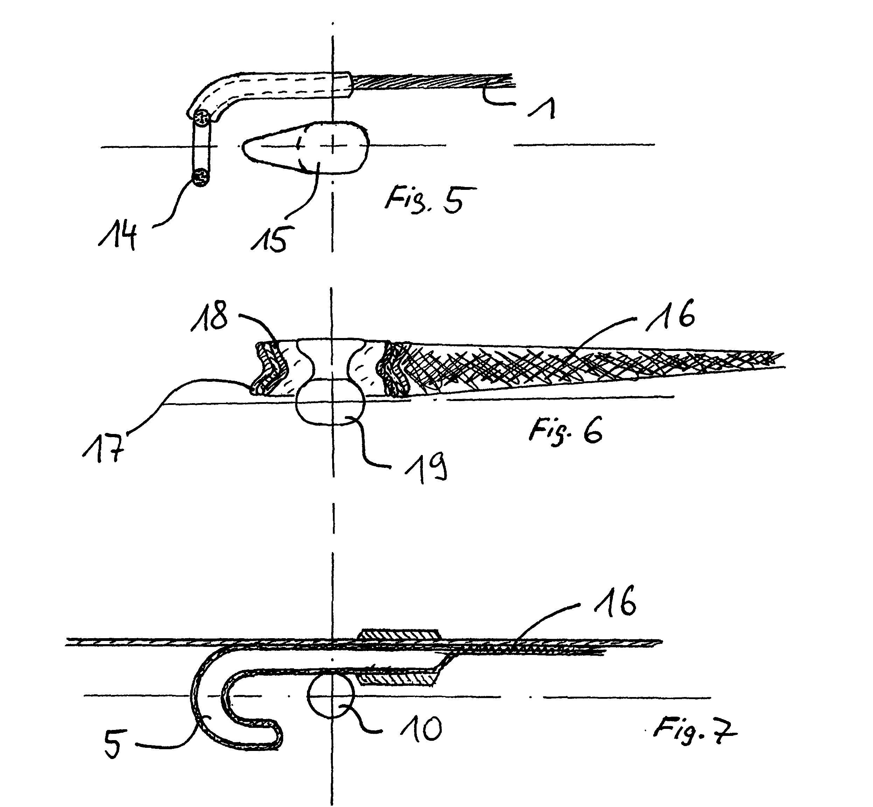

Die Fig. 2 zeigt ein Ausführungsbeispiel einer Airbagvorrichtung A mit dem vorstehenden unter Bezugnahme auf die Fig. 1 erläuterten grundsätzlichen Aufbau, der im übrigen auch in den eingangs angegebenen früheren Schutzrechtsanmeldungen offenbart ist und Mechanikkomponenten M1 und M2 enthält, die umgelenkt werden oder anders ausgedrückt, Umlenkungen enthalten. Zugseile 1 einerseits und andererseits eine große Umlenkung 2 und eine kleine Umlenkung 3 sind als Bestandteile der Mechanikkomponenten M2 bzw. M1 innerhalb eines z.B. Strangpressprofils oder rechteckigen Verstärkungs- oder Blechkastens 4 montiert, das bzw. der das Gehäuse H des Airbagmoduls B bildet und sich an einem Armaturentafelträger R rund um eine Airbagöffnung O positioniert abstützt, die vor einer Auslösung der Airbagvorrichtung A von der wenigstens einen Airbagklappe K insbesondere bündig zur Armaturentafel V verschlossen ist. Die Zugseile 1 enden verclincht in einem Mitnehmerhaken 5. Dieser Mitnehmerhaken 5 gehört zusammen mit den Zugseilen 1 zur Mechanikkomponente M2 auf Seiten der Airbagklappe K und wird an einer Blechabstellung 6 des Blechkastens 4 lagepositioniert mit einer Klammer 7 o.ä. gehalten, die zu der Mechanikkomponente M1 gehören. Das Ende 8 der Blechabstellung 6 bildet einen Halteanschlag für die Klammer 7. Diese Montage wird im Blechkasten 4 nach der Montage des Blechkastens 4 am Armaturentafelträger (nicht gezeigt) durchgeführt.

Das Airbagmodul B ist mit einem Kolben 9 als Bestandteil des Antriebs T versehen, der beidseitig mit Mitnehmerbolzen 10 als Bestandteil der ersten Mechanikkomponente M1 bestückt ist. Die Mitnehmerbolzen 10 sind derart positioniert, dass sie vor den offenen Mitnehmerhaken 5 zu liegen kommen, der z.B. um 7,5° kippen kann. Beim Crash fahren diese Mitnehmerbolzen 10 in die Mitnehmerhaken 5, während sie in Schlitzen 11 geführt werden. Die Kopplung oder Wirkverbindung der Mechaniken M1 und M2 erfolgt somit bei diesem Ausführungsbeispiel erst durch die oder bei der Auslösung der Airbagvorrichtung A.

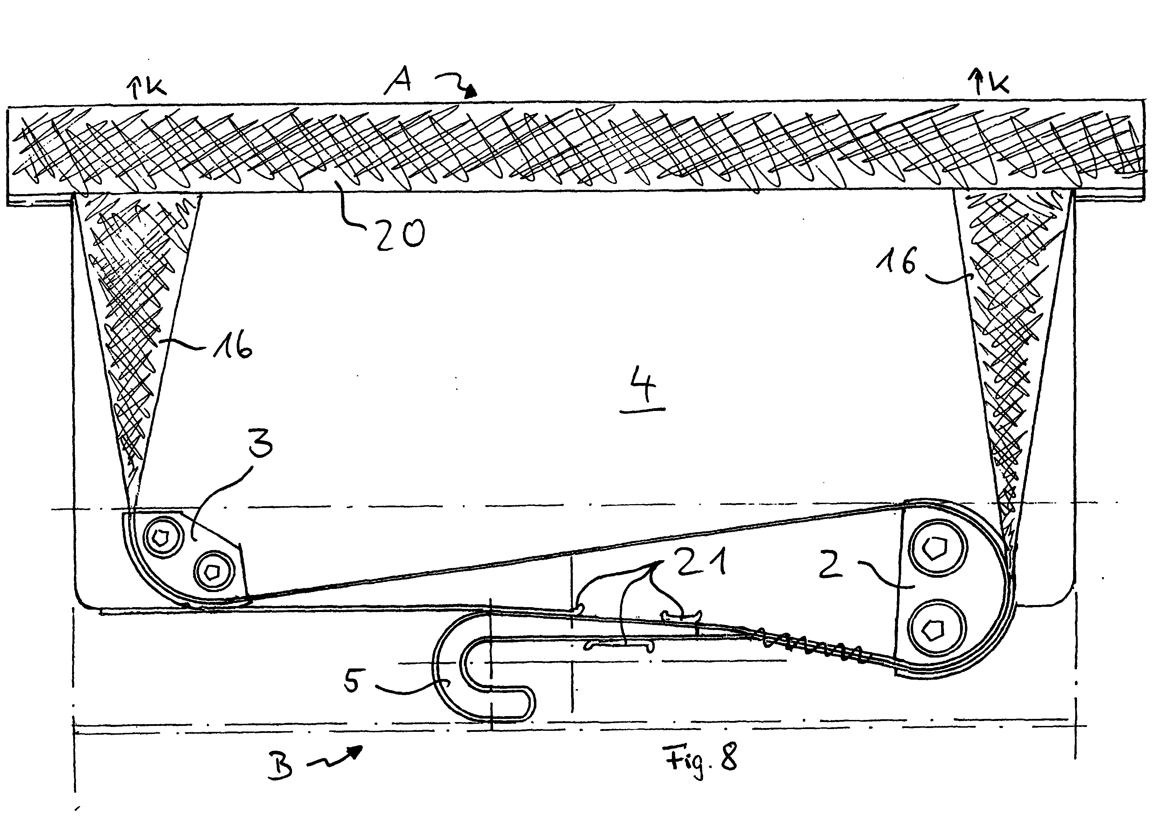

Die Fig. 3 zeigt einen Querschnitt durch das Airbagmodul B, durch Mitnehmerbolzen 10, Mitnehmerhaken 5, Blechkasten 4, die Blechabstellung 6 und einen Generator 12, der identisch mit dem Gasgenerator G für das Druckgas zum Aufblasen des Airbags oder Gassackes S oder eine gesonderte Stufe dieses Gasgenerators G oder ein gesonderter Gasgenerator sein kann. Der Schnitt zeigt, dass der Mitnehmerhaken 5 zwischen dem entsprechend mit "Taschen" 13 ausgestatteten Airbagmodul B und der Blechabstellung 6 des Blechkastens 4 während eines Crashs zwangsläufig geführt wird.

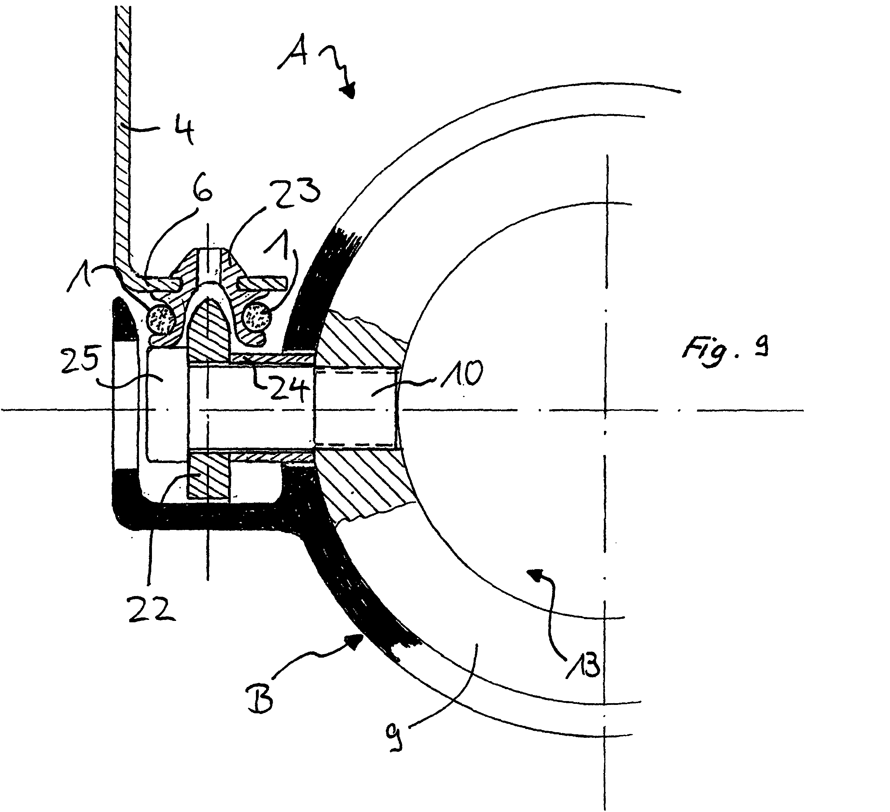

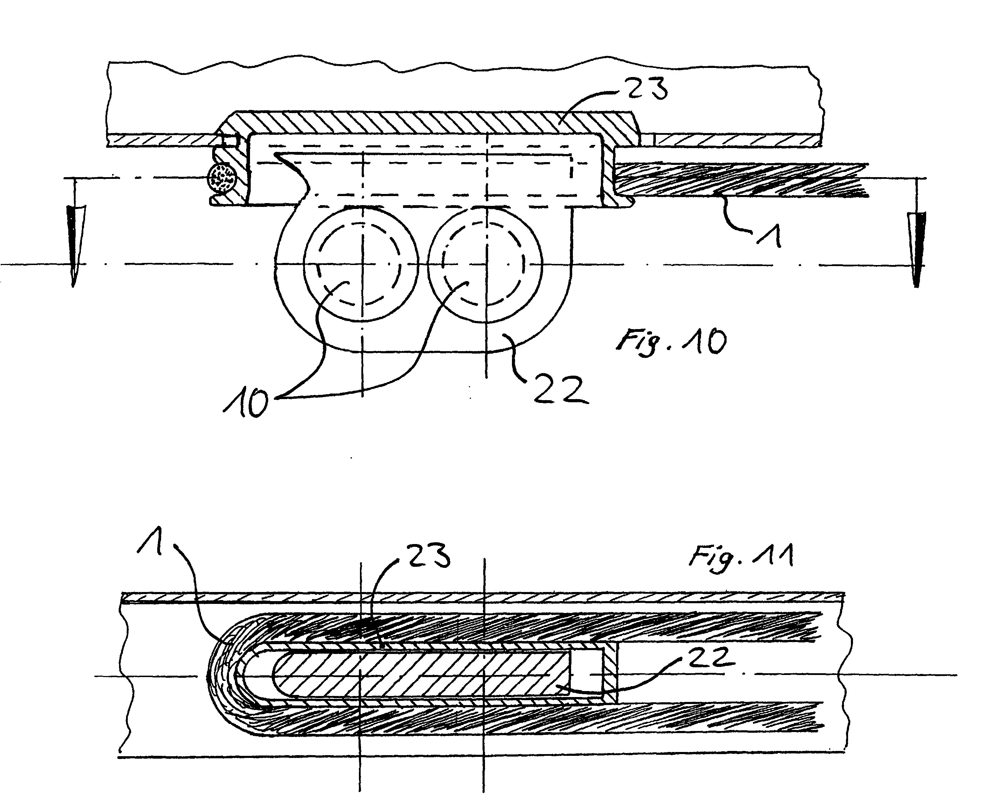

Die Fig. 4 zeigt eine Alternative, bei der das Ende der Zugseile 1 in einer Seilschlaufe 14 endet. Als Mitnehmer ist hierzu ein abgekröpfter Mitnehmerbolzen 15 vorgesehen. Die Fig. 5 zeigt diese Anordnung im Schnitt.

Die Fig. 6 zeigt eine Alternative anstelle der Zugseile 1 durch Verwendung von Zugbändern 16.

Die Fig. 7 zeigt eine Alternative, bei der der Mitnehmerhaken 5 funktionsgerecht mit den Zugbändern 16 umgeben und beispielsweise zur Befestigung damit verklebt ist.

Die Fig. 8 zeigt den Zusammenbau einer Wand des Blechkastens 4 mit den großen und kleinen Umlenkungen 2 bzw. 3, den Zugbändern 16 und einem Mitnehmerhaken 5, der mit den Zugbändern 16 quasi einstückig umklebt ist. Dieser Mitnehmerhaken 5 ist zwischen Blechausstellungen 21 lagepositioniert festgehalten.

Die Fig. 9 zeigt ein weiteres Ausführungsbeispiel mit einer weiteren Alternative einer Seilzugmechanik, bei der ein Mitnehmer 22 an einem Mitnehmerbolzen 10 zwischen einem Mitnehmerbolzenkopf 25 und Abstützhülsen 24 befestigt ist. Die Zugseile 1 sind auf einem speziellen Montagering 23 montiert. In diesen Montagering 23 wird bei Montage des Airbagmodules B von unten automatisch der Mitnehmer 22 eingesteckt.

Die Fig. 10 sowie 11 zeigen die im Schnitt der Fig. 9 dargestellte Technik zur weiteren Klarstellung im senkrechten Längs- und horizontalen Querschnitt. Dargestellt ist jeweils die Lage des Mitnehmers 22 und dessen Form zur Mitnahme der Zugseile 1 und die Anbindung des Mitnehmers 22 an den Mitnehmerbolzen 10.

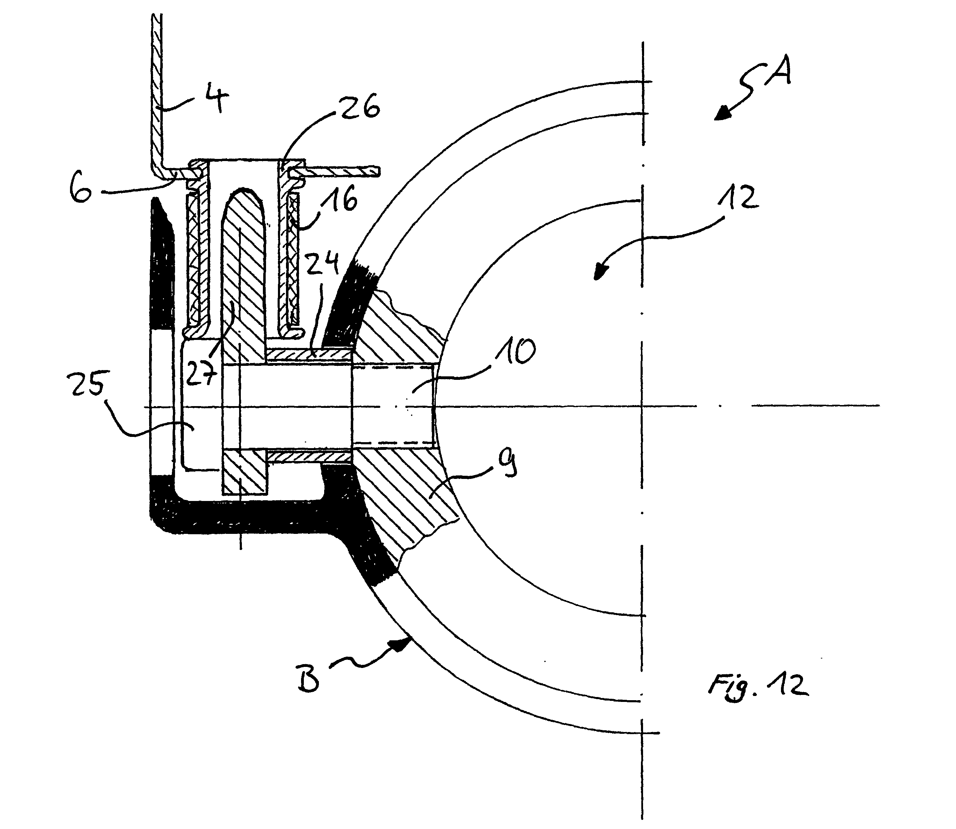

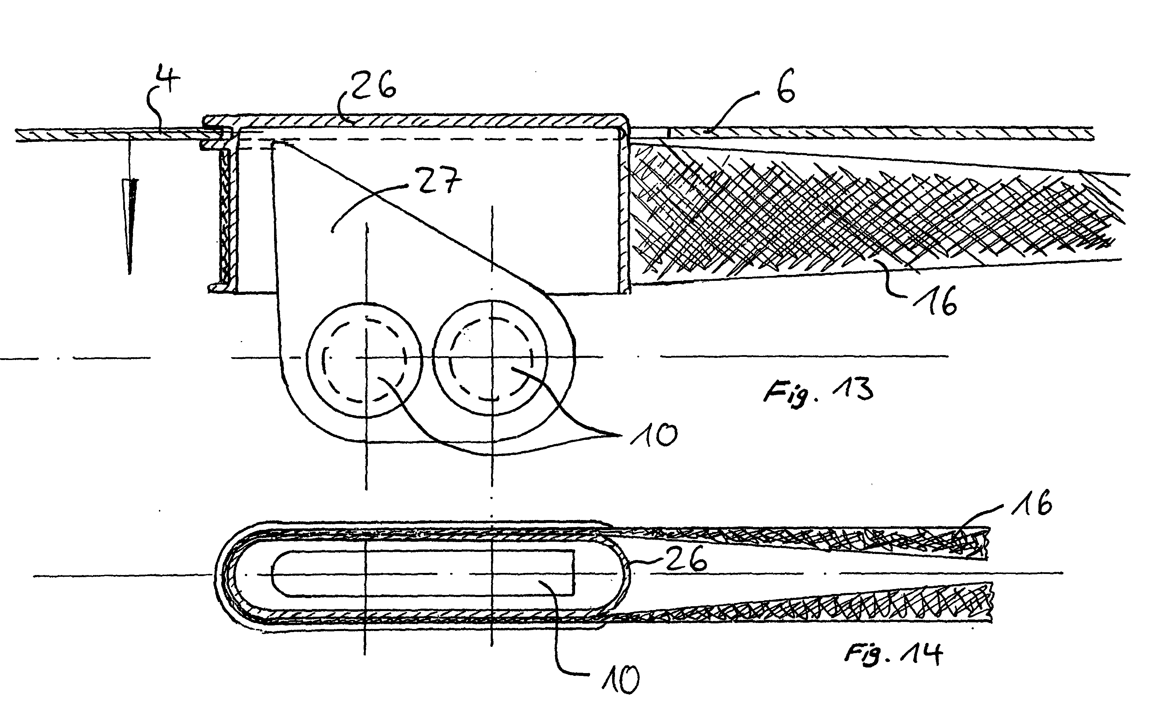

Die Fig. 12, 13 und 14 zeigen eine Alternative der Anbindung der Mechanik mit Zugbändern 16 bei einem entsprechend anders gestaltetem Montagering 26 und Mitnehmer 27 in allen Schnitten (x, y, z).

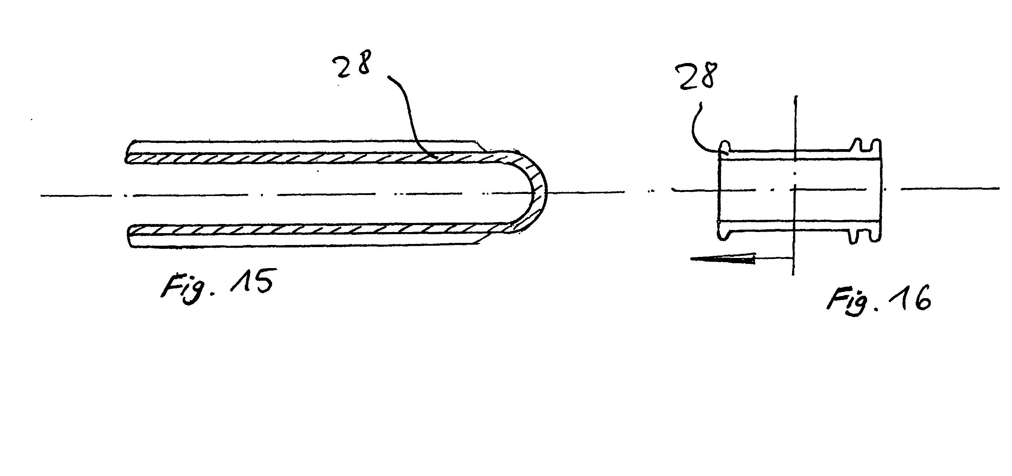

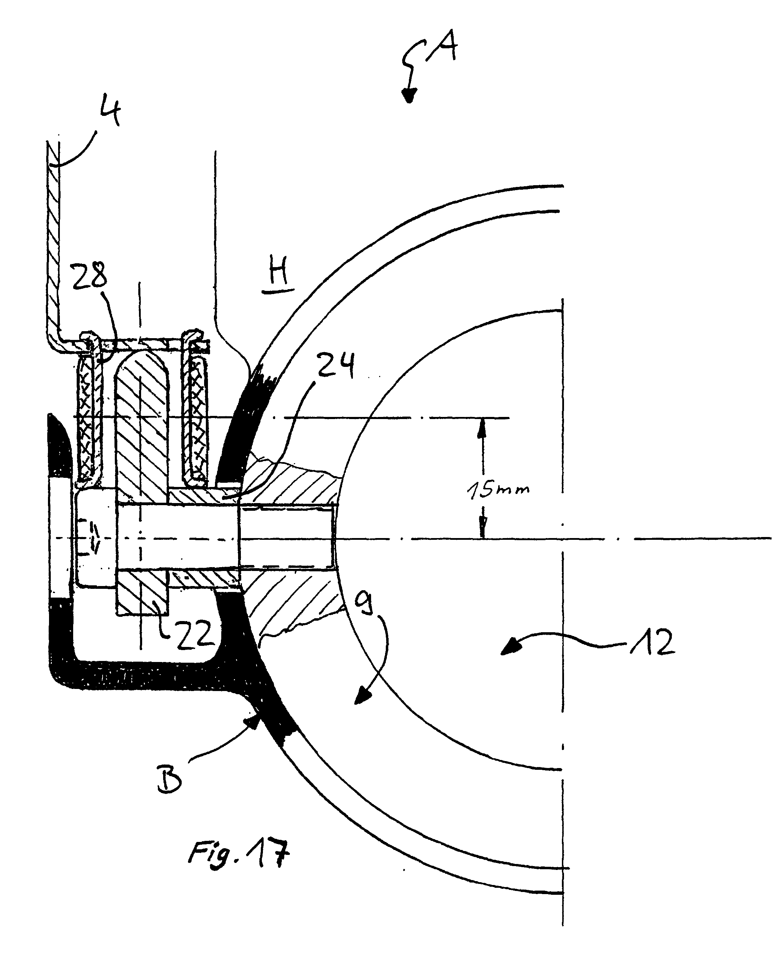

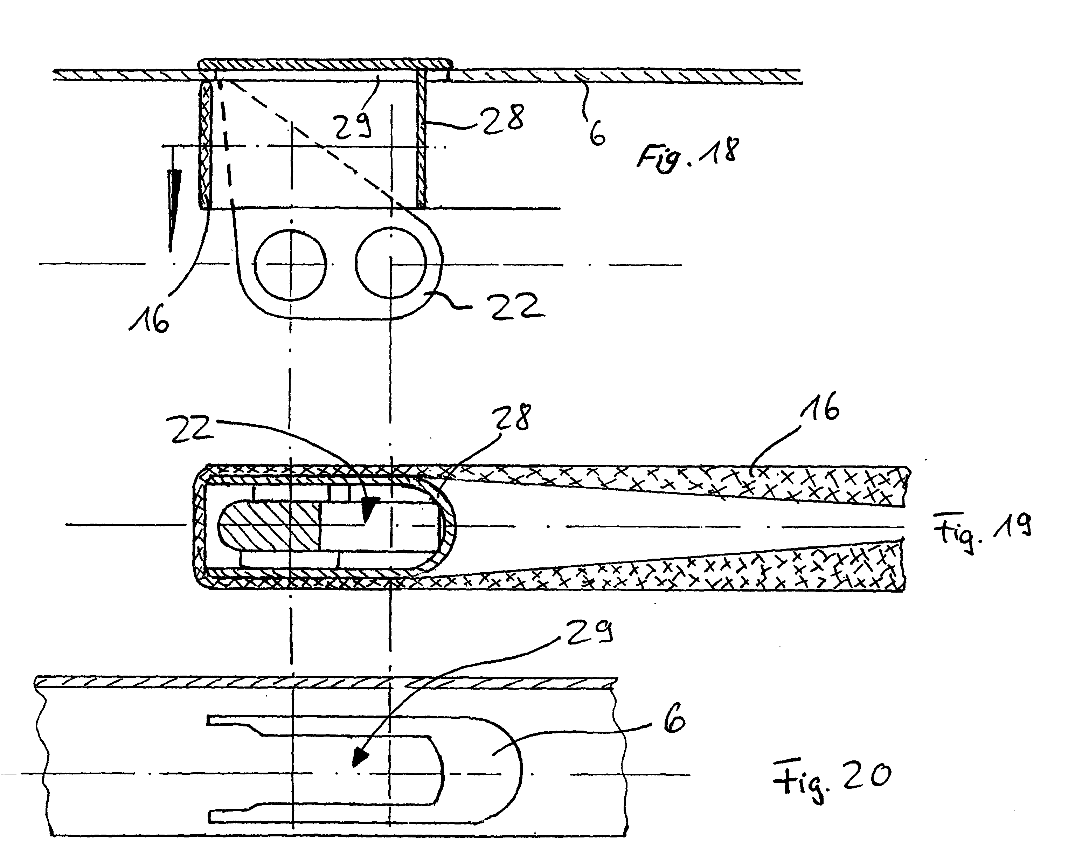

Die Fig. 15, 16 und 17 zeigen eine Alternative der Anbindung der Zugbänder 16 an einem anders gestalteten Mitnehmer 22. Dieser Mitnehmer 22 (Ansicht Fig. 16 und Schnitt Fig. 15) ist "offen" ausgeführt. Damit bleibt der Mitnehmer 22 in dem Blechkasten 4. Der Mitnehmer 22 ergreift nur die Schlaufe der Zugbänder 16 bei einem Crash und nimmt sie mit. Der Zusammenbau ist in der Fig. 17 gezeigt, die auch eine exemplarische Grössenangabe enthält. Die Fig. 18 zeigt dazu den Vertikalschnitt des "offenen" Montagerings. Die Fig. 19 zeigt den Horizontalschnitt und die Fig. 20 die Ausstanzung 29 in der Blechabstellung 6, auf die der einseitig offene Montagering 26 aufgesteckt wird.

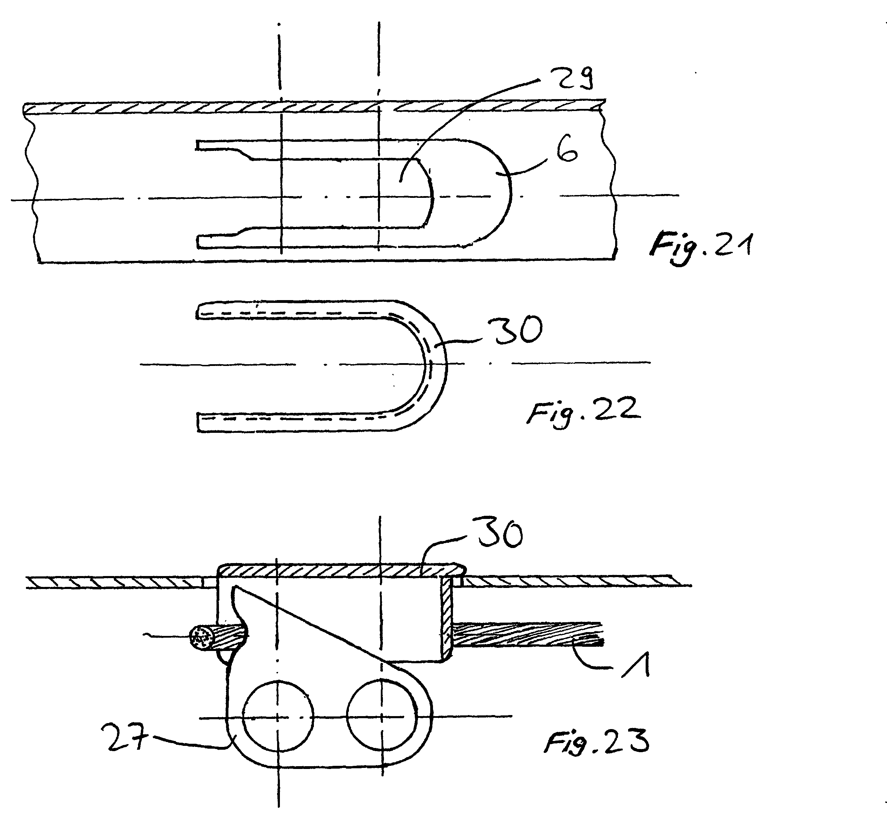

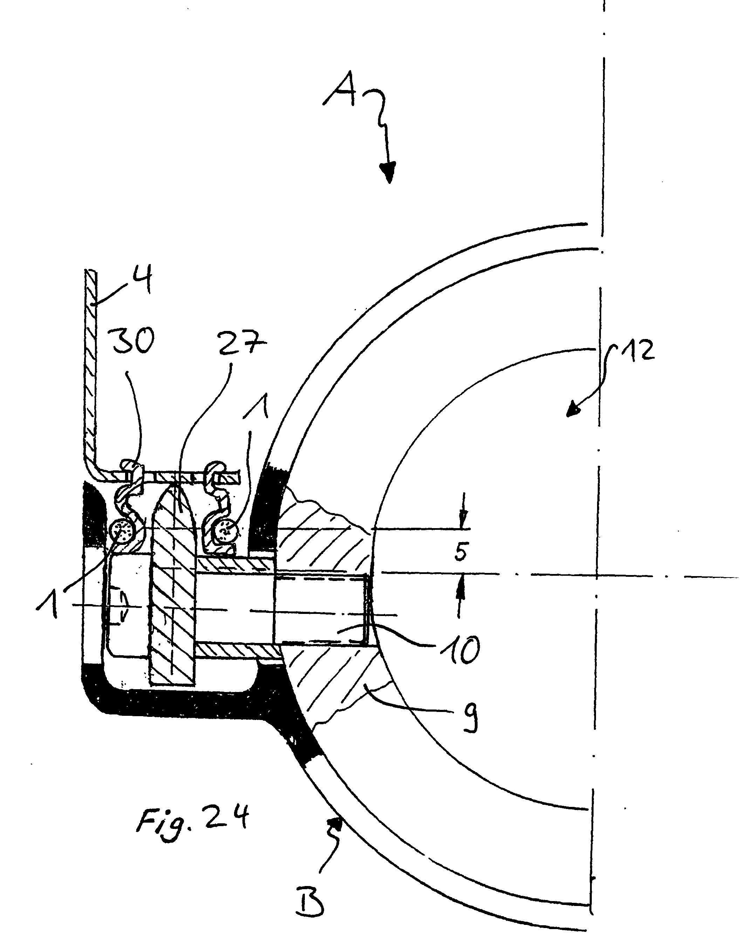

Die Fig. 21, 22 und 23 zeigen die gleiche Erfindungsvariante als Alternative mit Zugseilen. Hierzu wird ein anders gestalteter "offener" Montagering 30 benötigt. Dieser Montagering wird ebenso in die Ausstanzung 29 der Blechabstellung 6 gesteckt. Die Fig. 24 zeigt im Querschnitt die zusammengebaute Anordnung, einschließlich einer exemplarischen Grössenangabe.

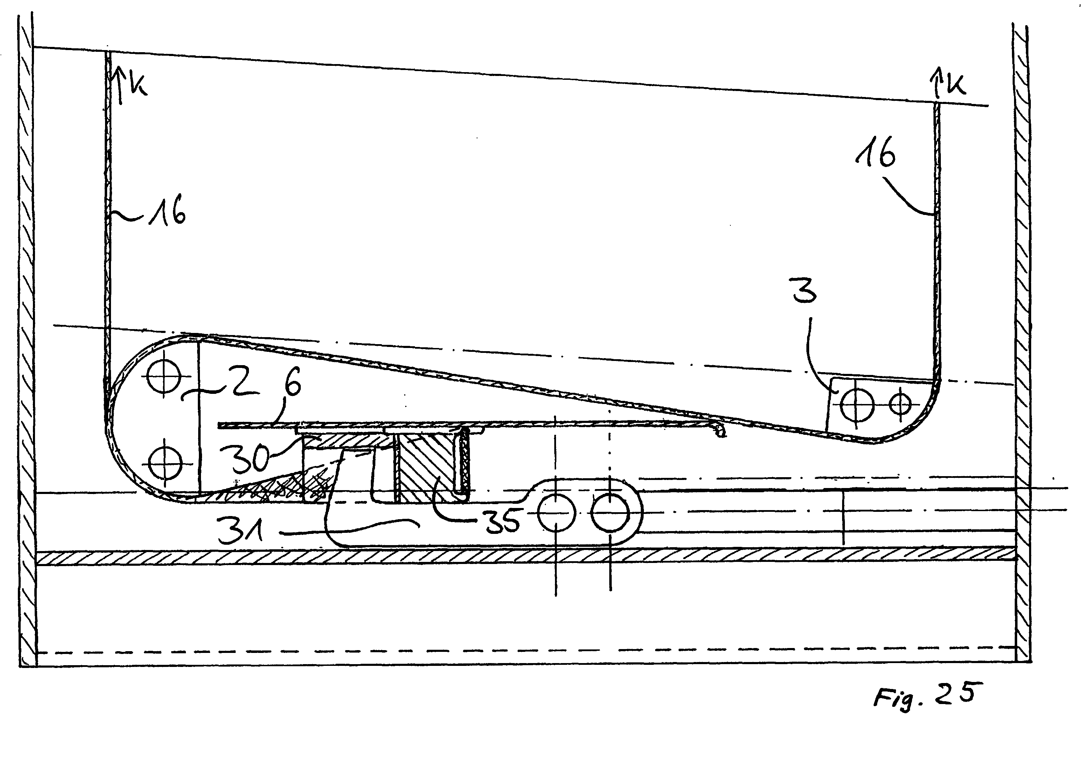

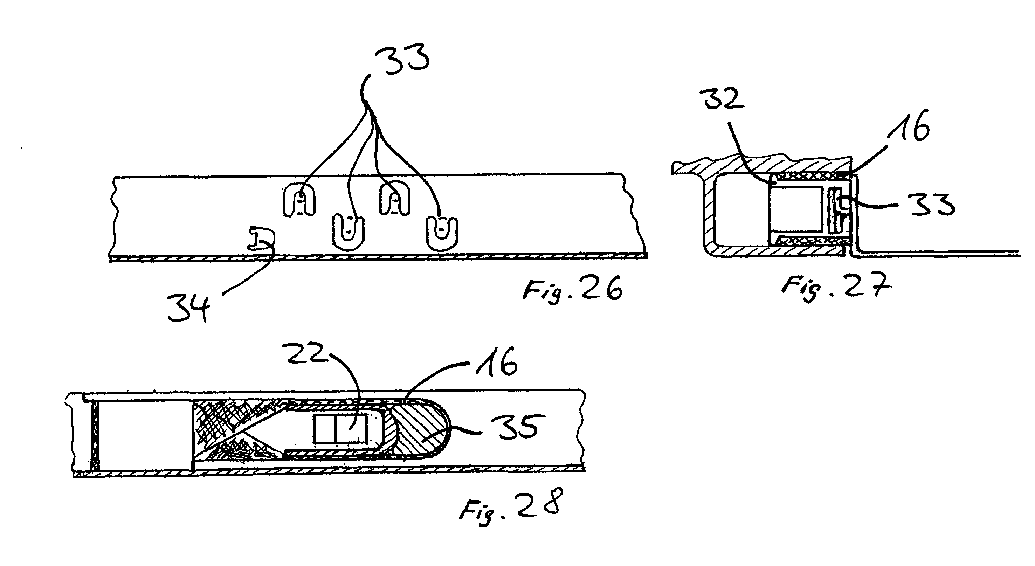

Die Fig. 25 zeigt eine weitere "Package"-optimierte Ausführung mit einem Schlepphebel 31 als Mitnehmer der Zugbänder 16. Die Zugbänder 16 sind auf einen spezifisch gestalteten Montagering 32 aufmontiert, der seinerseits in dieser Alternative auf mehrere ausgestellte Blechnasen 33 aufgesteckt (siehe Fig. 26) wird, die aus der Blechabstellung 6 ausgeformt werden. Der Montagering 32 wird an einer ebenso angeformten Blechausstellung 34 lagepositioniert. Die Fig. 27 zeigt den vertikalen Schnitt der Auslegung mit Montagering 32 und Zugbändern 16 montiert an den Blechnasen 33.

Die Fig. 28 zeigt den Horizontalschnitt der Ausführung gemäß den Fig. 25 bis 27 und als eine weitere Besonderheit die Möglichkeit, die Längentoleranz der Zugbänder 16 an ihrer Schlaufe 17 mit einem Toleranzausgleichsklotz 35 zu unterfüttern. Dieser Toleranzausgleichsklotz 35 wird, wie der Montagering, auch auf die Blechnasen 33 oder auf den Montagering 32 aufgesteckt. Wie gezeigt ist, können durch diese Lösung die Umlenkungen der Zugbänder 16 tiefer gelegt werden und auf einfachste Art die Längentoleranz der Zugbänder ausgeglichen werden.

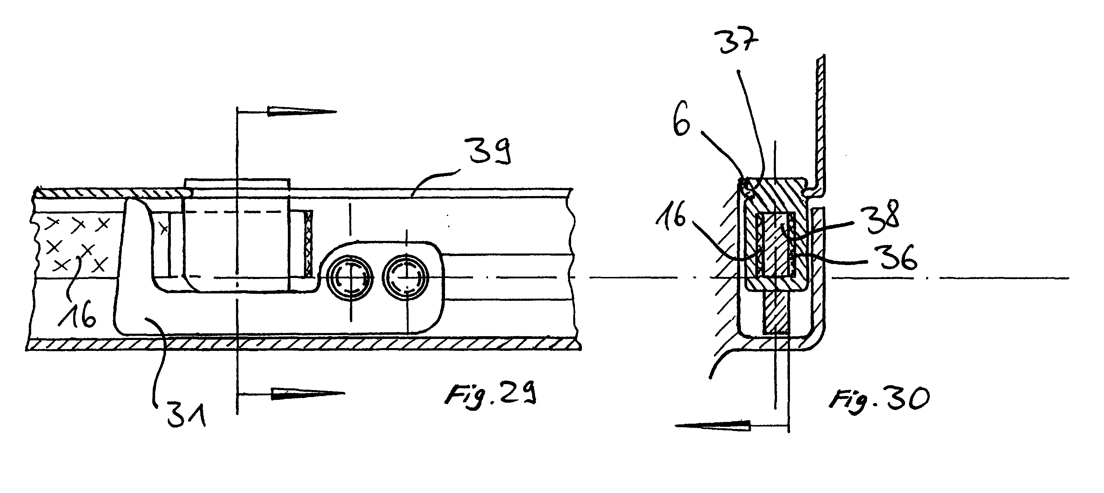

Die Fig. 29 und 30 zeigen im Vergleich zu der Ausführung, die in den Fig. 26 bis 28 gezeigt ist, eine andere Art des Längentoleranzausgleichs. Die Schlaufe 17 der Zugbänder wird durch ein beidseitig oder mindestens einseitig konisches Loch 36 in einem Montageteil 37 aus Material (z.B. Metall) gesteckt und mit individuell einstellbarer Vorspannung bzw. Bandlose mit einem Keil 38 verkeilt. Dieses Montageteil 37 steckt hier alternativ in einem Schlitz 39 und wird in diesem Schlitz 39 geführt mit dem Schlepphebel 31 beim Crash mitgenommen. Weitere Alternativen der Befestigung des Montageteiles 37 und dessen Führung wurden in den anderen Alternativen gezeigt. Weitere Alternativen liegen im Rahmen des fachmännischen Wissens.

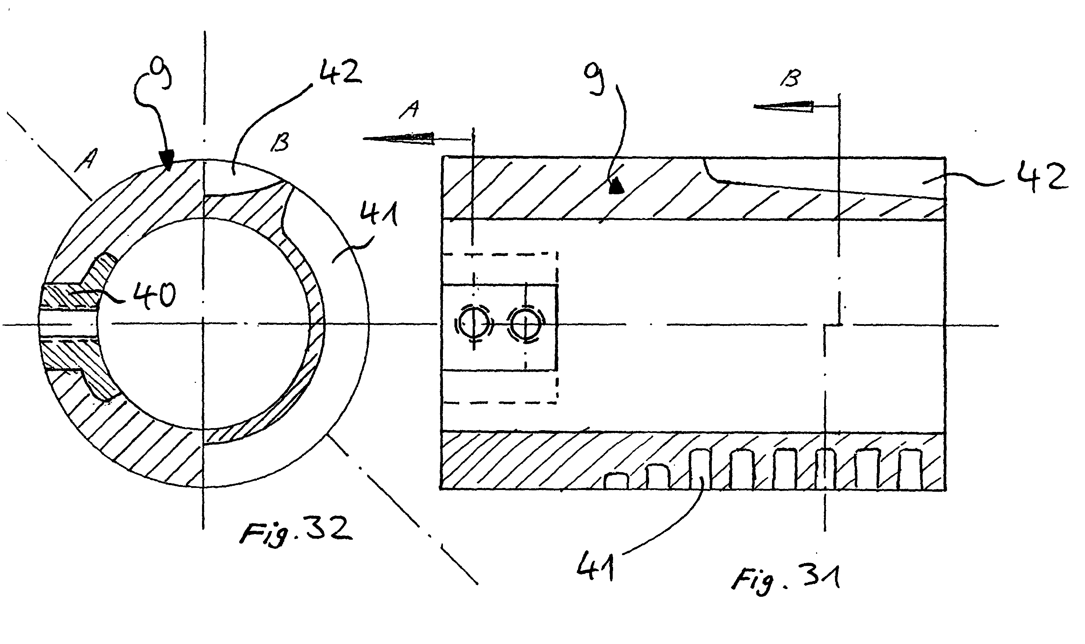

Die Fig. 31 und 32 zeigen den Kolben 9, der die Mechanik über die Mitnehmerbolzen 10 antreibt. Die Besonderheiten des Kolbens 9 sind, dass er aus thermoplastischem Kunststoff mit metallischen Verstärkungen 40 für die Mitnehmerbolzen 10 hergestellt ist. Die Verstärkungen können auch alternativ aus einem umlaufenden Ring bestehen (nicht gezeigt). Eine weitere Eigenart ist die Abdichtung des Kolbens mittels Rillen 41, die bei den hohen Gasgeschwindigkeiten eine Dichtung durch Wirbel erzeugen. Diese "Wirbel"-Dichtungen können alternativ am Innen- oder/und Außendurchmesser angebracht sein. Die Kanten dieser Rillen sind derart gestaltet, dass sie bei den hohen Temperaturen der Gase abschmelzen und ebenso zusätzlich dichten. Weiter hat der Kolben 9 eine abgestimmte Aussparung 42, mit der nach dem Prinzip der Gassteuerung eines Zweitaktmotors abgestimmt nach der Bewegung der Klappenöffnungsmechanik M das Gas in den Airbag gesteuert wird. Die linke und rechte Hälfte der Darstellung in der Fig. 32 gehört entsprechend zur Schnittlinie A bzw. Schnittlinie B in der Fig. 31. Strichpunktiert ist in der Fig. 32 eine Werkzeugtrennlinie eingezeichnet.

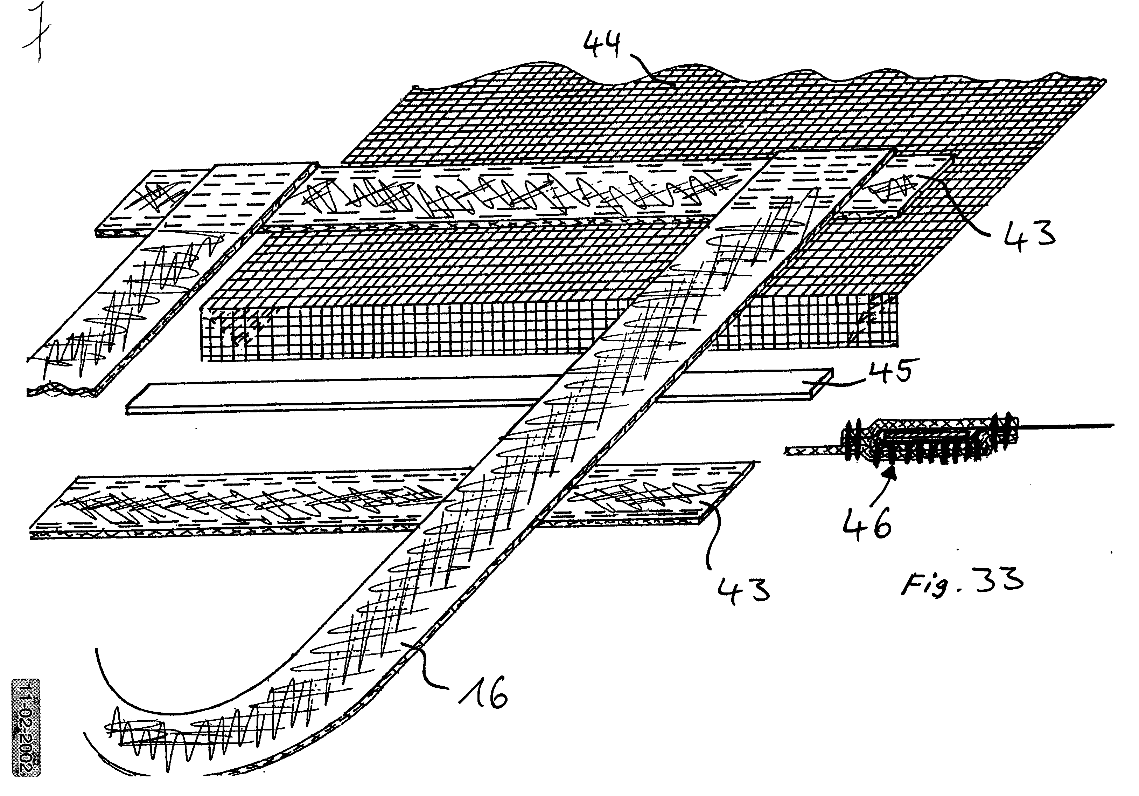

Die Fig. 33 zeigt die Anordnung der Zugmechanik mit Zugbändern 16. Die Zugbänder 16 sind mit zwei Querlast verteilenden Bändern 43 zusammen mit einem Gewebe 44 der Armaturentafelabdeckung in deren Armaturentafelfolie (nicht gezeigt) eingelegt. Zur noch besseren Lastverteilung wird ein Metallstreifen 45 o.ä. verwendet. Im Detail als Schnitt ist die Vernähung 46 gezeigt.

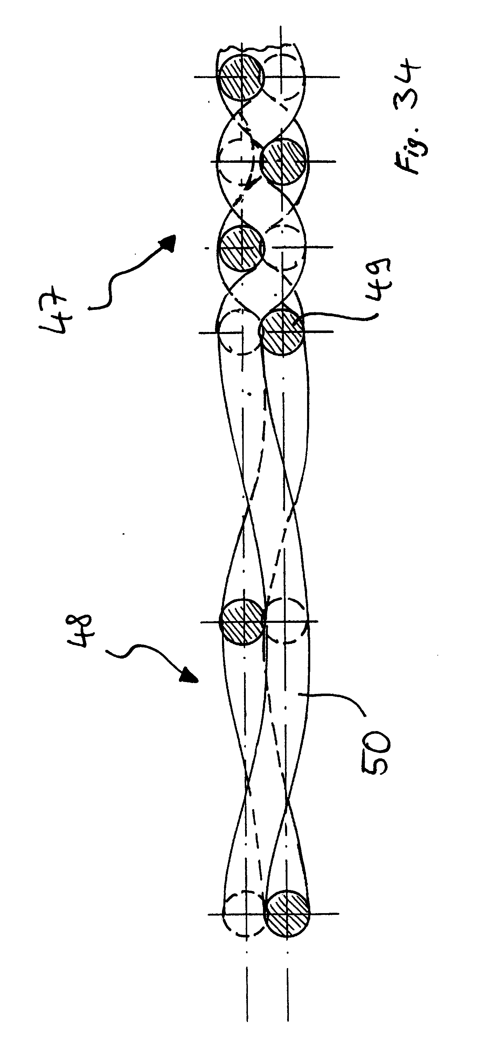

Die Fig. 34 verdeutlicht die Aufgabe dehnungsarmer Zugbänder 16. Die Bänder sind erfindungsgemäß eine Spezialkonstruktion. Im Nähbereich 47 wird hohe Festigkeit erreicht durch eng angeordnete Querfäden 49. Im Zugbereich 48 wird die Dehnung vermindert durch großen Abstand der Querfäden 49. Hierdurch wird im Zugbereich 48 die Welligkeit der Längsfäden 50 und damit die Dehnung bei Last verringert.

Wesentlich bei der vorliegenden Erfindung ist, dass ein ACTIVE-DOOR-Mechanismus (Mechanismus zur Betätigung einer Airbagklappe) der getrennt von Airbagmodul montiert bzw. demontiert wird. Vorzugsweise berührt sich dieses System grundsätzlich sich bei der Montage bzw. Demontage nicht, sondern wird erst bei einem Crash miteinander gekoppelt.

Die Montage der Zugseile oder Zugbänder oder allgemein Zugelemente erfolgt innerhalb eines Verstärkungskastens, der einen Airbagausschnitt in einer Armaturentafel abstützt. Weiterhin erfolgt eine Zusammenführung der Zugelemente in einem gegenüber der Mitnehmerbolzen lagepositionierten Haken (beispielsweise Fig. 2). Dazu gibt die Erfindung bevorzugte spezifische Anbindungstechniken der Zugseile bzw. der Zugbänder am Haken an (beispielsweise Fig. 5, 6 und 7). Weiterhin kann eine Führung der Koppelmechanik und Abdeckung derselben durch Taschen, die am Strangpressprofil des Airbaggehäuses integriert sind, und auf der Gegenseite durch Abstellungen des Verstärkungskastens (beispielsweise Fig. 3) erfolgen.

Eine Alternative hat eine Seil- bzw. Zugband-Schlaufe und entsprechend geformte bzw. abgekröpfte Mitnehmerbolzen (beispielsweise Fig. 4, 5 und 6). Alternativ kann die Anbindung des Hakens mit einer Klammer oder mit Blechausstellungen erfolgen. Bei einer weiteren Alternative ist der Mitnehmer in einen Montagering (beispielsweise Fig. 9, 10 und 11) eingesteckt sowie abscherend und funktionsgerecht ausgeführt bei Zugseilen oder bei Zugbändern (beispielsweise Fig. 12, 13 und 14). Der Montagering kann alternativ offen und bleibend fest montiert (beispielsweise Fig. 15, 16 und 17) in einem Schlitz bei Ausführung mit Bändern sein. Eine andere Ausführungsform ist bleibend fest montiert in einer formgerechten Ausstanzung, in der der Montagering bei Ausführung mit Bändern (beispielsweise Fig. 18, 19 und 20) lagefixiert gehalten wird. Dies ist auch mit Seilen (beispielsweise Fig. 21, 22, 23 und 24) möglich.

Eine weitere alternative Ausführungsform enthält Schlepphebel zur Packageoptimierung und Längentoleranzausgleich der Bänder mit beigelegten Klötzen (beispielsweise Fig. 25). Dies kann weitergebildet werden durch eine Befestigung des Montageringes mit Blechnasen, ausgestanzt und ausgestellt aus der Abstellung des Armaturentafelblechkastens (beispielsweise Fig. 26, 27 und 28). Anders oder zusätzlich ist ferner ein Toleranzausgleich durch lageoptimierte Verkeilung in einem keilförmigen Loch im Montageteil möglich (beispielsweise Fig. 29 und 30).

Ferner kann ein Kolben aus Thermoplast mit Bolzenverstärkung und Aufnahme (beispielsweise Fig. 31 und 32) verwendet werden. Die Ausführung des Kolbens kann außerdem "Wirbel"-Dichtungen und Abschmelzungen zur Dichtheit enthalten. Es kann auch vorgesehen sein, dass der Kolben als Steuerelement zur gezielten Zwangsgassteuerung zum Airbag nach Öffnung der Klappern ausgeführt ist.

Weitere bevorzugte Alternativen bestehen darin, dass die Zugmechanik Bänder mit Lastverteilungsbändern und/oder eine lastverteilende Metallverstärkung enthält, was alles vorzugsweise entsprechend vernäht ist (beispielsweise Fig. 33). Dabei weisen vorzugsweise die Zugbänder spezifisch im Nähbereich eng positionierte Querbänder zur optimalen Festigkeit auf. Weiterhin ist bevorzugt, wenn die Zugbänder spezifisch im Zugbereich mit wenigen Querbändern zur Herabsetzung der Welligkeit und damit zur Dehnung versehen sind.

Zusammenfassend schafft die vorliegende Erfindung eine Mechanik zur Öffnung von Airbagklappen in ein Modul hinein mit getrennt montier- und demontierbarem Airbagmodul in verschiedenen Alternativen. Verbunden damit sind als Vorteile eine einfache Montage des Airbagmodules, obwohl dieses Modul zusätzlich zur Füllung des Airbags zeitlich vorher die Airbagklappen nach innen in das Modul öffnet, sowie eine automatische Trennung des Airbagmodules bei Demontage von der Öffnungsmechanik bzw. automatische Verbindung des Modules beim Crash mit der Öffnungsmechanik der Airbagklappen.

### Bezeichnungen

- A: Airbagvorrichtung
- B: Airbagmodul
- G: Gasgenerator
- H: Gehäuse
- K: Airbagklappe
- M: Mechanik
- M1: Mechanikkomponenten
- M2: Mechanikkomponente
- O: Öffnung
- P: Kopplungsstelle
- R: Träger
- S: Gassack
- T: Antrieb
- U: Unterbringungsraum
- V: Armaturenbrett
- 1: Zugseile
- 2: Umlenkung groß
- 3: Umlenkung klein
- 4: Blechkasten
- 5: Mitnehmerhaken
- 6: Blechabstellung
- 7: Klammer
- 8: Ende der Blechabstellung 6
- 9: Kolben
- 10: Mitnehmerbolzen
- 11: Schlitze
- 12: Generator
- 13: Taschen
- 14: Seilschlaufe
- 15: abgekröpfter Mitnehmerbolzen
- 16: Zugbänder
- 17: Schlaufe
- 18: Montagering
- 19: geformter Mitnehmerbolzen
- 20: Gewebe-Band-Anbindung
- 21: Blechausstellungen
- 22: Mitnehmer
- 23: Montagering
- 24: Abstützhülse
- 25: Schraubenkopf
- 26: Montagering
- 27: Mitnehmer
- 28: Montagering
- 29: Ausstanzung
- 30: Montagering
- 31: Schlepphebel
- 32: Montagering
- 33: Blechnasen
- 34: Blechausstellung
- 35: Toleranzausgleichsklotz
- 36: Loch
- 37: Montageteil
- 38: Keil
- 39: Schlitz
- 40: Verstärkung
- 41: Rillen (Dichtung)
- 42: Aussparung
- 43: Last verteilende Bänder
- 44: Gewebe
- 45: Metallstreifen
- 46: Vernähung
- 47: Nähbereich
- 48: Zugbereich
- 49: Querfäden
- 50: Längsfäden

## Patentansprüche

1. Airbagvorrichtung mit einem Airbagmodul (B) und wenigstens einer Abdeckeinrichtung (K), hinter der in einer Schließlage ein sich durch Gasfüllung ausbreitender Gassack (S) untergebracht ist und die zum Freigeben der Ausbreitung des Gassackes (S) mittels einer Koppelmechanik (M) aus der Schließlage in eine Offenlage bewegbar ist,
wobei die Koppelmechanik (M) eine erste Mechanikkomponente (M1), die fest mit dem Airbagmodul (B) gekoppelt ist, und eine zweite Mechanikkomponente (M2) enthält, die fest mit der Abdeckeinrichtung (K) gekoppelt ist, und wobei das Airbagmodul (B) zusammen mit der ersten Mechanikkomponente (M1) eine einbaufertige Einheit bildet, und
wobei Zugelemente, wie Zugseile (1) oder Zugbänder (16) als Bestandteile der zweiten Mechanikkomponente (M2) an oder innerhalb eines Verstärkungskastens (4) montiert sind, der eine Öffnung (O) für den Airbagaustritt in einer Armaturentafel (V) abstützt,
**dadurch gekennzeichnet,**
**dass** die Zugelemente (1, 16) als Bestandteile der zweiten Mechanikkomponente (M2) in einem Haken (5) zusammengeführt sind, der gegenüber wenigstens einem Mitnehmerbolzen (10, 15, 19, 22, 27) als Bestandteil der ersten Mechanikkomponente (M1) lagepositioniert ist, oder dass eine Seil- bzw. Zugband-Schlaufe (17) und entsprechend geformte bzw. abgekröpfte Mitnehmerbolzen (15) vorgesehen sind.

2. Airbagvorrichtung nach Anspruch 1, **dadurch gekennzeichnet, dass** sich die erste Mechanikkomponente (M1) und die zweite Mechanikkomponente (M2) bei der Montage bzw. Demontage nicht berühren und erst im Crash miteinander gekoppelt werden.

3. Airbagvorrichtung nach einem der vorhergehenden Ansprüche, **dadurch gekennzeichnet, dass** die zweite Mechanikkomponente (M2) der Koppelmechanik (M) und Abdeckungen derselben durch Taschen (13), die an einem Strangpressprofil des Airbaggehäuses (G) integriert sind, und auf der Gegenseite durch Abstellungen des Verstärkungskastens (4) geführt ist.

4. Montageverfahren für eine Airbagvorrichtung mit einem Airbagmodul (B) und wenigstens einer Abdeckeinrichtung (K), hinter der in einer Schließlage ein sich durch Gasfüllung ausbreitender Gassack (S) untergebracht ist und die zum Freigeben der Ausbreitung des Gassackes (S) mittels einer Koppelmechanik (M) aus der Schließlage in eine Offenlage bewegbar ist,
wobei die Koppelmechanik (M) eine erste Mechanikkomponente (M1), die fest mit dem Airbagmodul (B) gekoppelt wird, und eine zweite Mechanikkomponente (M2) enthält, die fest mit der Abdeckeinrichtung (K) gekoppelt wird, und wobei das Airbagmodul (B) zusammen mit der ersten Mechanikkomponente (M1) eine einbaufertige Einheit bildet, und
wobei Zugelemente, wie Zugseile (1) oder Zugbänder (16), als Bestandteile der zweiten Mechanikkomponente (M2) an oder innerhalb eines Verstärkungskastens (4) montiert sind, der eine Öffnung (O) für den Airbagaustritt in einer Armaturentafel (V) abstützt,
**dadurch gekennzeichnet, dass** die erste Mechanikkomponente (M1) beim Einbau der Airbagvorrichtung (A) hinter einer Fahrzeuginnenverkleidung in eine Wirklage bezüglich der zweiten Mechanikkomponente (M2) gebracht wird, indem die Zugelemente (1, 16) als Bestandteile der zweiten Mechanikkomponente (M2) in einem Haken (5) zusammengeführt werden, der gegenüber wenigstens einem Mitnehmerbolzen (10, 15, 19, 22, 27) als Bestandteil der ersten Mechanikkomponente (M1) lagepositioniert ist, oder indem eine Seil- bzw. Zugband-Schlaufe (17) und entsprechend geformte bzw. abgekröpfte Mitnehmerbolzen (15) vorgesehen sind.

5. Montageverfahren nach Anspruch 4, **dadurch gekennzeichnet, dass** die erste Mechanikkomponente (M1) und die zweite Mechanikkomponente (M2) beim Einbau der Airbagvorrichtung (A) hinter einer Fahrzeuginnenverkleidung miteinander gekoppelt werden.

6. Betriebsverfahren für eine Airbagvorrichtung nach einem der Ansprüche 1 bis 3, **dadurch gekennzeichnet, dass** die erste Mechanikkomponente (M1) und die zweite Mechanikkomponente (M2) erst durch eine Auslösung der Airbagvorrichtung wirksam miteinander gekoppelt werden.

## Claims

1. Airbag apparatus, with an airbag module (B) and at least one covering device (K), behind which, in a closing position, an airbag (S) expanding by gas inflation is accommodated and which, to release the expansion of the airbag (S), can be moved out of the closing position into an open position by means of a coupling mechanism (M), in which the coupling mechanism (M) contains a first mechanism component (M1), which is coupled firmly to the airbag module (B), and a second mechanism component (M2), which is coupled firmly to the covering device (K), and in which the airbag module (B) forms, together with the first mechanism component (M1), a unit ready for installation, and in which traction elements, such as traction ropes (1) or traction bands (16), are mounted, as integral parts of the second mechanism component (M2), on or within a reinforcing box (4) which supports an orifice (O) for the emergence of the airbag in an instrument panel (V), **characterized in that** the traction elements (1, 16), as integral parts of the second mechanism component (M2), are combined in a hook (5) which is positioned in relation to at least one driving bolt (10, 15, 19, 22, 27) as an integral part of the first mechanism component (M1), or **in that** a rope loop or traction band. loop (17) and correspondingly shaped or bent driving bolts (15) are provided.

2. Airbag apparatus according to Claim 1, **characterized in that**, during mounting and demounting, the first mechanism component (M1) and the second mechanism component (M2) do not touch one another and are coupled to one another only in a crash.

3. Airbag apparatus according to one of the preceding claims, **characterized in that** the second mechanism component (M2) of the coupling mechanism (M) and coverings thereof are led through pockets (13), which are integrated in an extruded profile of the airbag housing (G), and, on the opposite side, through putaways of the reinforcing box (4).

4. Mounting method for an airbag apparatus, with an airbag module (B) and at least one covering device (K), behind which, in a closing position, an airbag (S) expanding by gas inflation is accommodated and which, to release the expansion of the airbag (S), can be moved out of the closing position into an open position by means of a coupling mechanism (M), in which the coupling mechanism (M) contains a first mechanism component (M1), which is coupled firmly to the airbag module (B), and a second mechanism component (M2), which is coupled firmly to the covering device (K), and (B) the airbag module in which forms, together with the first mechanism component (M1), a unit ready for installation, and in which traction elements, such as traction ropes (1) or traction bands (16), are mounted, as integral, parts of the second mechanism component (M2), on or within a reinforcing box (4) which supports an orifice (O) for the emergence of the airbag in an instrument panel (V), **characterized in that**, during the installation of the airbag apparatus (A) behind a vehicle interior trim panel, the first mechanism component (M1) is brought into an active position with respect to the second mechanism component (M2), **in that** the traction elements (1, 16), as integral parts of the second mechanism component (M2), are combined in a hook (5) which is positioned in relation to at least one driving bolt (10, 15, 19, 22, 27) as an integral part of the first mechanism component (M1), or **in that** a rope-band or traction-band loop (17) and correspondingly shaped or bent driving bolts (15) are provided.

5. Mounting method according to Claim 4, **characterized in that**, during the installation of the airbag apparatus (A) behind a vehicle interior trim panel, the first mechanism component (M1) and the second mechanism component (M2) are coupled to one another.

6. Operating method for an airbag apparatus according to one of Claims 1 to 3, **characterized in that** the first mechanism component (M1) and the second mechanism component (M2) are coupled actively to one another only by means of a release of the airbag apparatus.

## Revendications

1. Dispositif d'airbag comprenant un module d'airbag (B) et au moins un dispositif de recouvrement (K), derrière lequel est installé, dans une position de fermeture, un sac de gaz (S) se déployant sous l'effet d'un remplissage de gaz et qui peut se déplacer de la position de fermeture dans une position d'ouverture pour libérer le déploiement du sac de gaz (S) au moyen d'un mécanisme d'accouplement (M),
dans lequel le mécanisme d'accouplement (M) contient un premier composant mécanique (M1) qui est connecté fermement au module d'airbag (B) et un deuxième composant mécanique (M2) qui est connecté fermement au dispositif de recouvrement (K) et dans lequel le module d'airbag (B) conjointement avec le premier composant mécanique (M1) forme une unité prête au montage, et
dans lequel des éléments de traction, comme des câbles de traction (1) ou des bandes de traction (16) sont montés sous forme de constituants du deuxième composant mécanique (M2) sur ou dans une boîte de renforcement (4) qui supporte une ouverture (O) pour la sortie de l'airbag dans un tableau de bord (V),
**caractérisé en ce que**
les éléments de traction (1, 16) sont réunis sous forme de constituants du deuxième composant mécanique (M2) en un crochet (5), qui est positionné par rapport à au moins un goujon d'entraînement (10, 15, 19, 22, 27) sous forme de constituant du premier composant mécanique (M1), ou **en ce que** l'on prévoit un câble ou une bande de traction en boucle (17) et des goujons d'entraînement (15) formés ou coudés de manière correspondante.

2. Dispositif d'airbag selon la revendication 1,
**caractérisé en ce que** le premier composant mécanique (M1) et le deuxième composant mécanique (M2) ne se touchent pas lors du montage ou du démontage et ne sont accouplés l'un à l'autre qu'en cas de collision.

3. Dispositif d'airbag selon l'une quelconque des revendications précédentes,
**caractérisé en ce que** le deuxième composant mécanique (M2) du mécanisme d'accouplement (M) et ses recouvrements sont guidés par des poches (13) qui sont intégrées sur un profil filé du boîtier d'airbag (G), et sur le côté opposé par des moyens d'arrêt de la boîte de renforcement (4).

4. Procédé de montage pour un dispositif d'airbag comprenant un module d'airbag (B) et au moins un dispositif de recouvrement (K), derrière lequel est installé, dans une position de fermeture, un sac de gaz (S) se déployant sous l'effet d'un remplissage de gaz et qui peut se déplacer de la position de fermeture dans une position d'ouverture pour libérer le déploiement du sac de gaz (S) au moyen d'un mécanisme d'accouplement (M),
dans lequel le mécanisme d'accouplement (M) contient un premier composant mécanique (M1) qui est connecté fermement au module d'airbag (B) et un deuxième composant mécanique (M2) qui est connecté fermement au dispositif de recouvrement (K) et dans lequel le module d'airbag (B) conjointement avec le premier composant mécanique (M1) forme une unité prête au montage et
dans lequel des éléments de traction, comme des câbles de traction (1) ou des bandes de traction (16) sont montés sous forme de constituants du deuxième composant mécanique (M2) sur ou dans une boîte de renforcement (4) qui supporte une ouverture (O) pour la sortie de l'airbag dans un tableau de bord (V),
**caractérisé en ce que**
le premier composant mécanique (M1), lors de l'installation du dispositif d'airbag (A) derrière un habillage intérieur du véhicule, est amené dans une position fonctionnelle par rapport au deuxième composant mécanique (M2), en réunissant les éléments de traction (1, 16) sous forme de constituants du deuxième composant mécanique (M2) en un crochet (5), qui est positionné par rapport à au moins un goujon d'entraînement (10, 15, 19, 22, 27) sous forme de constituant du premier composant mécanique (M1), ou **en ce que** l'on prévoit un câble ou une bande de traction en boucle (17) et des goujons d'entraînement (15) formés ou coudés de manière correspondante.

5. Procédé de montage selon la revendication 4,
**caractérisé en ce que** le premier composant mécanique (M1) et le deuxième composant mécanique (M2) lors de l'installation du dispositif d'airbag (A) derrière un habillage intérieur du véhicule sont connectés l'un à l'autre.

6. Procédé de fonctionnement pour un dispositif d'airbag selon l'une quelconque des revendications 1 à 3, **caractérisé en ce que** le premier composant mécanique (M1) et le deuxième composant mécanique (M2) sont seulement connectés l'un à l'autre fonctionnellement par un déclenchement du dispositif d'airbag.
